# EUROPÄISCHE PATENTSCHRIFT

(11) **EP 1 063 110 B1**
(45) Veröffentlichungstag und Bekanntmachung des Hinweises auf die Patenterteilung: **22.09.2004**
(21) Anmeldenummer: 00111455.2
(22) Anmeldetag: 27.05.2000
(51) Int. Cl.: B60H 1/00, B60H 1/34

(54) **Einstellbares Ventil für die Zufuhr von Kühlungsluft zu einem Handschuhfach**
Adjustable valve for supplying cooling air to a glove compartment
Soupape réglable pour l'alimentation d'air de refroidissement dans une boîte à gants

(30) Priorität: 22.06.1999 DE 19928586
(43) Veröffentlichungstag der Anmeldung: 27.12.2000
(73) Patentinhaber: Volkswagen Aktiengesellschaft, 38436 Wolfsburg (DE)
(72) Erfinder: Schramm, Hans-Ulrich. Dipl.Ing, 39179 Barleben (DE); Arntz, Klaus-Dieter,Dipl.-Ing., 38527 Meine (DE)

(56) Entgegenhaltungen:
- DE-A- 3 701 848
- DE-B- 1 261 296
- GB-A- 1 073 405
- US-A- 2 902 838
- US-A- 5 014 964
- US-A- 5 162 018
- US-A- 5 328 152

## Beschreibung

Die vorliegende Erfindung betrifft ein manuell einstellbares Ventil für die Regelung der Zufuhr von Kühlungsluft zu einem Handschuhfach, enthaltend ein Unterteil mit einer ersten Kontaktfläche, in welcher die Auslaßöffnung eines Kanals für die Zufuhr von Kühlungsluft liegt, sowie ein Oberteil mit einer zweiten Kontaktfläche, in welcher eine Durchgangsöffnung liegt, wobei das Oberteil mittels eines Zapfens derart drehbar in einer Bohrung des Unterteils gelagert ist, daß die erste Kontaktfläche und die zweite Kontaktfläche gleitend aneinander entlang bewegt werden können und die Durchgangsöffnung in der Schließstellung des Ventils nicht und in der Öffnungsstellung des Ventils ganz oder teilweise mit der Auslaßöffnung überlappt.

Ventile der eingangs genannten Art sind vorbekannt (in dem Dokument US-A-5 328 152 ist ein ähnliches Ventil offenbart) und werden in Kraftfahrzeugen mit Klimaanlage eingesetzt, um über die Regelung der Zufuhr von Kühlungsluft eine Klimatisierung des Handschuhfaches wahlweise einstellen zu können. Dabei befindet sich das Ventil am Ende einer Verbindungsleitung, welche vom Klimagerät in das Innere des Handschuhfaches führt. Das drehbare Oberteil des Ventils ist für einen Bediener zugänglich und kann durch eine Drehung um den Zapfen kontinuierlich geöffnet bzw. ganz geschlossen werden. Das Öffnen bzw. Schließen wird bewirkt, indem die Durchgangsöffnung im Oberteil mehr oder weniger bzw. gar nicht vor der Auslaßöffnung im Unterteil angeordnet wird.

Bei Ventilen dieser Art tritt das Problem auf, daß Nebenströme kalter Luft auch bei geschlossenem Ventil auftreten können, wodurch sich eine unerwünschte Abkühlung des Handschuhfaches und unter Umständen auch des Fahrzeuginnenraumes einstellt.

Der vorliegenden Erfindung lag daher die Aufgabe zugrunde, eine unerwünschte Abkühlung des Handschuhfaches bzw. des Fahrzeuginnenraumes zu vermeiden.

Diese Aufgabe wird durch ein manuell einstellbares Ventil der eingangs genannten Art gelöst, bei welchem erfindungsgemäß der Zapfen des Oberteils mit der Bohrung des Unterteils zumindest abschnittsweise derart in einem Gewindeeingriff steht, daß das Oberteil in der Schließstellung des Ventils an das Unterteil herangezogen wird.

Durch die erfindungsgemäße Maßnahme wird erreicht, daß das Ventil in der Schließstellung die Auslaßöffnung der Kühlungsluft dicht verschließt, so daß keine unerwünschten Nebenströme von Kühlungsluft entstehen können. Dies wird erreicht, indem das Oberteil in der Schließstellung mit einer Andruckkraft an das Unterteil herangezogen wird, so daß die beiden an Oberteil und Unterteil ausgebildeten Kontaktflächen unter diesem Anpreßdruck dicht an dicht liegen. Das Auftreten von Spielräumen, durch welche Kühlungsluft austreten könnte, wird dadurch verhindert. Diesen vorteilhaften Effekt erreicht die Erfindung durch verhältnismäßig einfache Veränderungen an einem bekannten Ventil. Letzteres ist nämlich lediglich an der Verbindungsstelle, d.h. an Zapfen einerseits und/oder Bohrung andererseits, geringfügig abzuändern. An den genannten Teilen sind Maßnahmen für einen in der Schließstellung des Ventils wirksamen Gewindeeingriff vorzusehen. Für die Realisierung eines solchen Gewindeeingriffes gibt es verschiedene Möglichkeiten, welche sich indes alle mit geringfügigen und daher kostengünstigen Änderungen an den Herstellungswerkzeugen (Spritzformen etc.) der Ventilteile erzielen lassen.

Eine spezielle Ausgestaltung des Gewindeeingriffes geht von einem Ventil aus, bei welchem der Zapfen in bekannter Weise an seiner Spitze nach außen stehende Klauen oder Klinken aufweist, welche die Rückseite der Bohrung hintergreifen. Unter der "Rückseite der Bohrung" ist dabei bei einer durch das Unterteil des Ventils durchgehenden Bohrung die dem Oberteil abgewandte Seite zu verstehen. Die Rückseite braucht keine große Fläche aufzuweisen. Vielmehr kann sie sich auf einen verhältnismäßig schmalen Rand um die Bohrung herum beschränken. Bei der genannten Ausgestaltung wird der Zapfen mit den nach außen stehenden Klauen durch die Bohrung gesteckt, wobei die federnd gelagerten Klauen gegen eine elastische Kraft radial nach innen gedrückt werden, um durch die engere Bohrung zu passen. Auf der Rückseite der Bohrung können die Klauen unter Ausnutzung der Federkraft dann in ihre ursprüngliche Position zurückspringen und dabei die Rückseite der Bohrung hintergreifen. Der Zapfen wird auf diese Weise in axialer Richtung in der Bohrung fixiert und bleibt gleichzeitig drehbar gelagert. Eine derartige Befestigung zwischen Oberteil und Unterteil wird auch als "Clipshalterung" bezeichnet.

Erfindungsgemäß wird eine derartige Clipshalterung dadurch abgewandelt, daß die Rückseite der Bohrung um die Bohrung herum zumindest abschnittsweise rampenförmig ausgebildet ist. Darunter ist zu verstehen, daß der rückseitige Rand der Bohrung zumindest auf einem Abschnitt nicht parallel zum entsprechenden Abschnitt auf der Vorderseite der Bohrung verläuft, sondern daß dieser Abstand von der Vorderseite stetig zunimmt. Gegenüber einem parallelen Verlauf zwischen Vorderseite und Rückseite befindet sich somit auf der Rückseite eine Rampe. Eine Klaue am Ende des Zapfens, welche auf den rückwärtigen Rand der Bohrung aufsitzt, wird daher bei einer Drehbewegung des Zapfens über den rampenförmig verlaufenden Rand der Bohrung bewegt. Bei ansteigender Rampe zieht sie das Oberteil in Richtung des Unterteils des Ventils an. Durch eine entsprechende Anordnung des rampenförmigen Abschnittes kann dabei erreicht werden, daß dieses Anziehen gerade in der Schließstellung des Ventils stattfindet.

Vorzugsweise besitzt bei der zuletzt beschriebenen Anordnung die Spitze des Zapfens zwei sich gegenüber sitzende Klauen, welche auf zwei entsprechend diametral gegenüberliegend angeordneten Rampen um die Bohrung herum geführt sind. Diese in bezug auf die Achse des Zapfens bzw. der Bohrung symmetrische Anordnung hat aufgrund ihrer symmetrischen Kraftwirkung den Vorteil, daß keine Querkräfte auf den Zapfen bzw. die Bohrung ausgeübt werden, welche zu einem Verklemmen und einer Erschwerung der Drehbewegung des Oberteiles Ganges führen könnten. Dabei erlaubt die Anordnung von zwei Klauen bzw. Rampen im Gegensatz zu einer höheren Anzahl symmetrisch angeordneter Klauen bzw. Rampen einen großen nutzbaren Drehbereich von 180°.

In einer vorteilhaften Weiterbildung der Erfindung sind zwischen der ersten und der zweiten Kontaktfläche Dichtmittel angeordnet, welche in der geschlossenen Stellung des Ventils dem Austritt von Kühlungsluft entgegenwirken. Die genannten Dichtmittel unterstützen somit die Abdichtung der Auslaßöffnung gegenüber dem Oberteil. Damit wird die Wirkung des Heranziehens des Oberteils an das Unterteil in der Schließstellung des Ventils verstärkt bzw. das Heranziehen muß bei gleicher Dichtwirkung weniger stark ausgeprägt werden. Der Einsatz der Dichtmittel erlaubt es daher, mit weniger großen Kräften auszukommen, so daß die Belastungen für die Bauteile verringert werden. Beispiele für geeignete Dichtelemente sind z.B. um die Auslaßöffnung herum angeordnete gummiartig elastische Dichtungsringe.

Vorzugsweise sind die Dichtmittel als korrespondierende Nut- und Feder-Elemente ausgebildet. Dabei wird die Nut im Oberteil oder im Unterteil angeordnet, während die zugehörige Feder im entsprechenden anderen Teil (Unterteil oder Oberteil) ausgebildet ist. Das Zusammenwirken einer Nut-Feder-Verbindung führt zu einem zusätzlichen Abdichten zwischen Oberteil und Unterteil, da die genannten Elemente zum einen passgenau ausgebildet sein können und zum anderen der Strömungsweg für die Luft beim Vorhandensein eventueller Spielräume stark gekrümmt ist, so daß sich allein hierdurch ein hoher Strömungswiderstand und damit ein Hindernis für den Luftaustritt bildet. Weiterhin wirkt eine Nut-Feder-Verbindung insofern mit dem Zusammenziehen von Oberteil und Unterteil in der Schließstellung des Ventils vorteilhaft zusammen, als durch das genannte Zusammenziehen Nut und Feder gerade zum Eingriff gebracht werden können.

Vorteilhafterweise verlaufen die Nut und entsprechend die Feder ringförmig und konzentrisch um die Achse des Zapfens bzw. der Bohrung herum. Vorzugsweise sind dabei zwei konzentrische Ringnuten bzw. Ringfedem ausgebildet, wobei sich die Auslaßöffnung bzw. die Durchgangsöffnung zwischen diesen Ringen befindet.

Nachfolgend ist die Erfindung anhand eines Ausführungsbeispiels im einzelnen erläutert. Es zeigen:
- Figur 1: eine perspektivische Darstellung einer Klimaeinrichtung für ein Handschuhfach;
- Figur 2: eine vergrößerte Darstellung der Anordnung eines einstellbaren Ventils im Handschuhfach;
- Figur 3: eine Seitenansicht des Oberteils des Ventils;
- Figur 4: einen Querschnitt durch das Ventil und
- Figur 5: eine vergrößerte Darstellung eines Querschnitts durch die Zapfenverbindung von Oberteil und Unterteil.

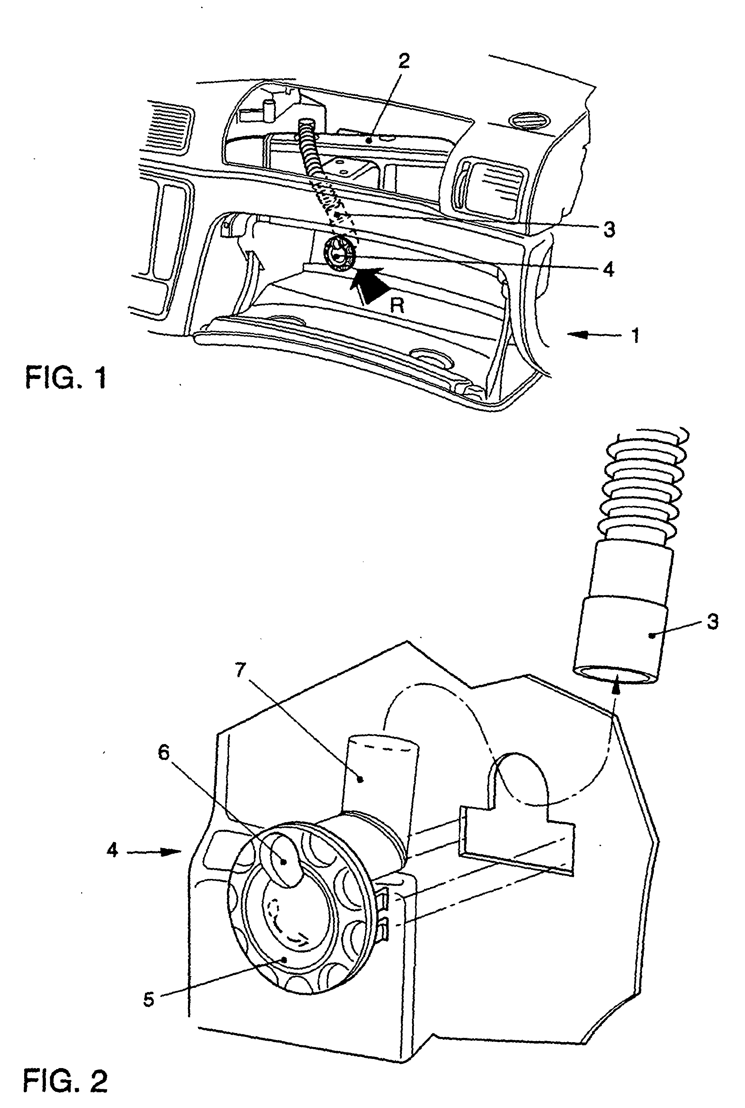

In Figur 1 ist perspektivisch und unter teilweiser Weglassung von Deckelementen die Anordnung einer Klimatisierung für ein Handschuhfach 1 dargestellt. Zu erkennen ist ein Kaltluftschlauch 3, welcher von dem im Bereich der Motorhaube angeordneten Klimagerät 2 zum Handschuhfach 1 führt. Am Ende dieses Kaltluftschlauches ist ein von Hand einstellbares Ventil 4 angeordnet.

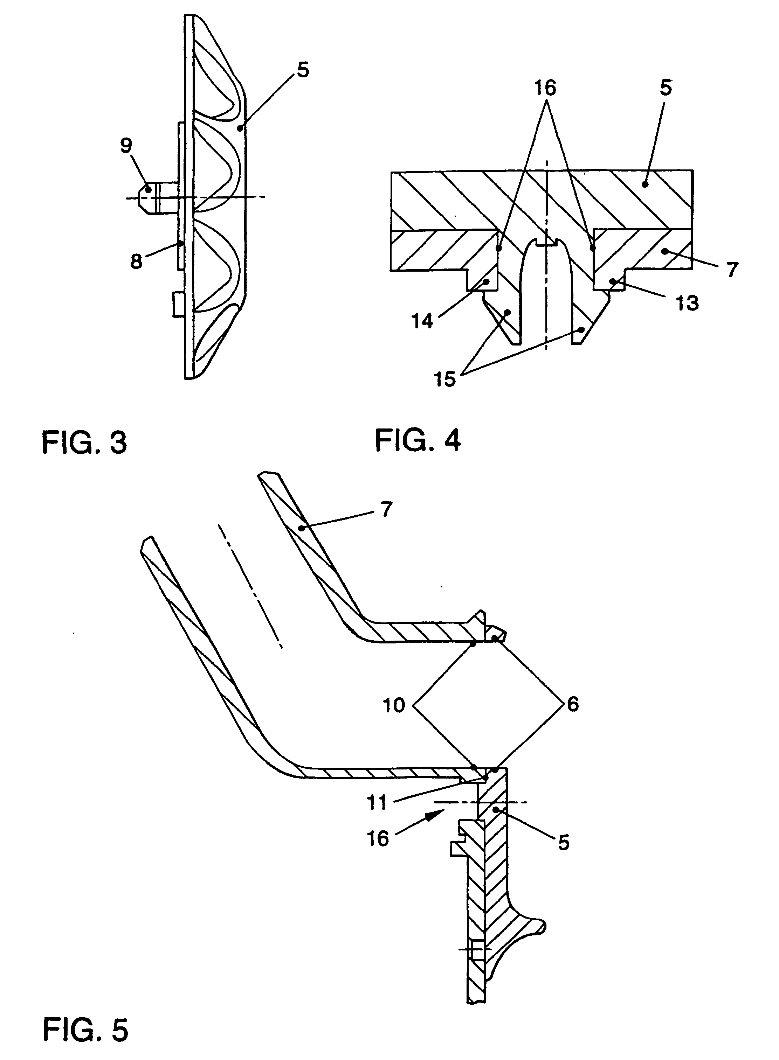

Dieses Ventil 4 ist vergrößert und in einer Explosionsansicht in Figur 2 dargestellt. Das Ventil 4 besteht aus einem Oberteil 5 und einem Unterteil 7. Das Oberteil 5 ist scheibenförmig und von außen zugänglich. Es besitzt an seinem Rand Griffmulden, in welche ein Bediener mit seinen Fingern eingreifen kann, um das Oberteil 5 zu drehen. Weiterhin besitzt das Oberteil 5 im Bereich seines Randes eine Durchgangsöffnung 6. Durch die Drehung des Oberteils 5 kann diese Durchgangsöffnung vor der Auslaßöffnung 10 (vgl. Figur 5) des Kanals für die Kühlungsluft, welcher im Unterteil 7 ausgebildet ist, angeordnet werden. Je nach Überlappungsgrad zwischen Durchgangsöffnung 6 und Auslaßöffnung 10 im Unterteil 7 kann der Zustrom von Kühlungsluft eingestellt werden. Insbesondere kann dieser Zustrom ganz abgestellt werden, wenn die Durchgangsöffnung ganz von der Auslaßöffnung weggedreht wird, so daß die Auslaßöffnung vom Oberteil 5 zugedeckt wird. Es hat sich allerdings gezeigt, daß sich bei den im Stand der Technik bekannten Ventilen keine vollständige Dichtheit dieser zuletzt beschriebenen Schließstellung des Ventils erzielen läßt. Dadurch kommt es zu unerwünschten Nebenströmen von Kaltluft aus dem "geschlossenen" Ventil 4 heraus. Um dies zu vermeiden, sind nach der vorliegenden Erfindung Abwandlungen an dem Ventil 4 vorgesehen, welche im folgenden näher beschrieben werden.

In Figur 3 ist eine Seitenansicht des Oberteils 5 dargestellt. Aus dieser ist erkennbar, daß aus der Mitte des scheibenförmigen Oberteils in Richtung auf das Unterteil zu ein Zapfen 9 hervorsteht. Dieser Zapfen 9 wird in eine korrespondierende Bohrung 16 im Unterteil eingeführt, um das Oberteil 9 drehbar zu lagern.

Diese Verbindung ist in Figur 4 im Schnitt vergrößert dargestellt. Zu erkennen ist das Oberteil 5, an welchem der Zapfen 9 angeordnet ist. Der Zapfen ist dabei im Detail so ausgebildet, daß er an seiner Spitze zwei nach außen stehende Klauen 15 aufweist, welche die Rückseite der Bohrung 16 im Unterteil 7 hintergreifen. Das Oberteil 5 kann auf diese Weise in das Unterteil "eingeclipst" werden, wobei der Zapfen 9 mit seinen Klauen 15 in bzw. hinter der Bohrung 16 des Unterteils 7 einrastet. Das Oberteil 5 wird hierdurch drehbar gelagert. Dabei gleiten die Klauen 15 des Zapfens auf dem rückwärtigen Rand der Bohrung 16. Dieser Rand ist erfindungsgemäß zumindest abschnittsweise als eine Rampe ausgebildet. Im Schnitt von Figur 4 wird dies dadurch ersichtlich, daß die Bohrung 16 an der rechten Seite 13 niedriger ist als an der linken 14. Durch die rampenförmige Ausgestaltung der Rückseite der Bohrung 16 wird ein Gewindeeffekt derart erzielt, daß bei einer Drehung des Oberteils 5 relativ zum Unterteil 7 (mindestens) eine Klaue 15 auf der Rampe geführt wird und dadurch das Oberteil auf das Unterteil 7 zuzieht. Wenn die Rampe so angeordnet wird, daß sie gerade in der Schließstellung des Ventils zur Wirkung kommt, kann das Heranziehen des Oberteils 5 an das Unterteil 7 ein Abdichten der geschlossenen Stellung des Ventils bewirken. Dies geschieht zum einen dadurch, daß die entsprechenden Kontaktflächen mit einem Anpreßdruck aufeinander gedrückt werden und hierdurch vorhandene Spielräume verschließen. Zum anderen kann das Heranziehen des Oberteils 5 an das Unterteil 7 zusätzlich das Eingreifen einer formschlüssigen Abdichtung bewirken.

Eine solche formschlüssige Abdichtung besteht bei der Erfindung vorzugsweise aus einer Nut-Feder-Verbindung. Letztere wird z.B. dadurch hergestellt, daß am Oberteil 5 eine konzentrisch um die Öffnung 6 umlaufende, hervorstehende Feder angeordnet ist. In der Seitenansicht nach Figur 3 ist die Feder 8 als Erhebung erkennbar.

Das Ineinandergreifen von Nut 11 und Feder 8 ist ferner aus dem Querschnitt in Figur 5 erkennbar. Figur 5 zeigt das Ventil in der geöffneten Stellung, in der die Durchgangsöffnung 6 im Oberteil 5 genau vor der Auslaßöffnung 10 im Unterteil 7 angeordnet ist. In dieser Stellung ist ein maximaler und ungehinderter Austritt von Kühlungsluft möglich. Das Oberteil 5 ist in der oben beschriebenen Weise drehbar gelagert, wobei im dargestellten Schnitt die Klauen 15 des Zapfens 9 nicht erkennbar sind (vgl. hierzu Figur 4). Erkennbar ist indes die Bohrung 16 im Unterteil 7. Weiterhin wird aus Figur 5 ersichtlich, daß die Nut 11 konzentrisch um die Durchgangsöffnung 6 umläuft.

### BEZUGSZEICHENLISTE

- 1: Handschuhfach
- 2: Klimagerät
- 3: Kaltluftschlauch
- 4: Ventil
- 5: Oberteil
- 6: Durchgangsöffnung
- 7: Unterteil
- 8: Feder, umlaufend
- 9: Zapfen
- 10: Auslaßöffnung
- 11: Nut, umlaufend
- 13: rechte Seite
- 14: linke Seite
- 15: Klauen
- 16: Bohrung

## Patentansprüche

1. Manuell einstellbares Ventil (4) für die Regelung der Zufuhr von Kühlungsluft zu einem Handschuhfach (1), enthaltend ein Unterteil (7) mit einer ersten Kontaktfläche, in welcher die Auslaßöffnung eines Kanals für die Zufuhr von Kühlungsluft liegt, sowie ein Oberteil (5) mit einer zweiten Kontaktfläche, in welcher eine Durchgangsöffnung (6) liegt, wobei das Oberteil (5) mittels eines Zapfens (9) derart drehbar in einer Bohrung (16) des Unterteil (7) gelagert ist, daß die erste Kontaktfläche und die zweite Kontaktfläche gleitend aneinander entlang bewegt werden können und die Durchgangsöffnung (6) in der Schließstellung des Ventils (4) nicht und in der Öffnungsstellung des Ventils (4) ganz oder teilweise mit der Ausgangsöffnung überlappt, **dadurch gekennzeichnet, daß** der Zapfen (9) mit der Bohrung (16) zumindest abschnittsweise derart in einem Gewindeeingriff steht, daß das Oberteil (5) in der Schließstellung des Ventils (4) an das Unterteil (7) herangezogen wird.

2. Ventil nach Anspruch 1, wobei der Zapfen (9) an seiner Spitze Klauen (15) aufweist, welche die Rückseite der Bohrung (16) hintergreifen, **dadurch gekennzeichnet, daß** die Rückseite der Bohrung (16) um die Bohrung herum zumindest abschnittsweise rampenförmig ausgebildet ist.

3. Ventil nach einem der Ansprüche 1 oder 2, **dadurch gekennzeichnet, daß** zwischen der ersten und der zweiten Kontaktfläche Dichtmittel angeordnet sind, welche in der geschlossenen Stellung des Ventils (4) dem Austritt von Kühlungsluft entgegenwirken.

4. Ventil nach Anspruch 3, **dadurch gekennzeichnet, daß** die Dichtmittel als korrespondierende Nut- (11, 12) und Feder-Elemente (8) ausgebildet sind.

5. Ventil nach Anspruch 4, **dadurch gekennzeichnet, daß** die Nut (11) und die Feder (8) ringförmig und konzentrisch um die Achse des Zapfens (9) bzw. der Bohrung (16) ausgebildet sind.

6. Ventil nach einem der Ansprüche 1 bis 5, **dadurch gekennzeichnet, daß** eine rampenförmige Ausbildung zwischen Oberteil 5 und Unterteil 7 liegt.

## Claims

1. Manually adjustable valve (4) for regulating the supply of cooling air to a glove compartment (1), containing a lower part (7) with a first contact surface, in which the outlet opening of a duct for the supply of cooling air lies, and an upper part (5) with a second contact surface, in which a passage opening (6) lies, the upper part (5) being mounted rotatably in a hole (16) in the lower part (7) by means of a pin (9) in such a manner that the first contact surface and the second contact surface can be moved in a manner sliding along each other, and the passage opening (6) does not overlap with the output opening in the closed position of the valve (4) and entirely or partially overlaps with the output opening in the open position of the valve (4), **characterized in that** the pin (9) is in threaded engagement, at least in some sections, with the hole (16) in such a manner that, in the closed position of the valve (4), the upper part (5) is pulled onto the lower part (7).

2. Valve according to Claim 1, the pin (9) having, on its tip, claws (15) which grip behind the rear side of the hole (16), **characterized in that** the rear side of the hole (16) is of ramp-shaped design, at least in some sections, around the hole.

3. Valve according to either of Claims 1 and 2, **characterized in that** sealing means are arranged between the first and the second contact surface and, in the closed position of the valve (4), oppose the emergence of cooling air.

4. Valve according to Claim 3, **characterized in that** the sealing means are designed as corresponding groove elements (11, 12) and tongue elements (8).

5. Valve according to Claim 4, **characterized in that** the groove (11) and the tongue (8) are formed annularly and concentrically around the axis of the pin (9) and of the hole (16).

6. Valve according to one of Claims 1 to 5, **characterized in that** a ramp-shaped formation is situated between the upper part (5) and lower part (7).

## Revendications

1. Soupape (4) réglable manuellement pour le réglage de l'alimentation en air de refroidissement d'une boîte à gants (1), comportant une pièce inférieure (7) présentant une première surface de contact, dans laquelle se trouve l'ouverture de sortie d'un canal d'alimentation en air de refroidissement, ainsi qu'une pièce supérieure (5) présentant une deuxième surface de contact, dans laquelle se trouve une ouverture de passage (6), la pièce supérieure (5) s'appuyant par un tourillon (9) en rotation dans un alésage (16) de la pièce inférieure (7) de manière à ce que la première surface de contact et la deuxième surface de contact puissent être déplacées en glissant le long l'une de l'autre et que l'ouverture de passage (6), en position de fermeture de la soupape (4), ne chevauche pas et, en position d'ouverture de la soupape (4) chevauche totalement ou partiellement l'ouverture de sortie, **caractérisée en ce que** le tourillon (9) est du moins par sections en engrènement fileté avec l'alésage (16) d'une manière telle que la pièce supérieure (5) se rapproche de la pièce inférieure (7) en position de fermeture de la soupape (4).

2. Soupape selon la revendication 1, dans laquelle le tourillon (9) présente à sa pointe des griffes (15) qui enserrent le côté arrière de l'alésage (16), **caractérisée en ce que** le côté arrière de l'alésage (16) est réalisé du moins par sections en forme de rampe autour de l'alésage.

3. Soupape selon l'une quelconque des revendications 1 ou 2, **caractérisée en ce qu'**entre la première et la deuxième surface de contact sont disposés des moyens d'étanchéité qui, en position fermée de la soupape (4), empêchent la sortie d'air de refroidissement.

4. Soupape selon la revendication 3, **caractérisée en ce que** les moyens d'étanchéité se présentent sous forme d'éléments à gorge (11, 12) et à ressort (8) se correspondant.

5. Soupape selon la revendication 4, **caractérisée en ce que** la gorge (11) et le ressort (8) ont une conformation annulaire et concentrique autour de l'axe du tourillon (9) ou de l'alésage (16).

6. Soupape selon l'une quelconque des revendications 1 à 5, **caractérisée en ce qu'**on a une conformation en forme de rampe entre la pièce supérieure 5 et la pièce inférieure 7.
